# FASCICULE DE BREVET EUROPEEN

(11) **EP 2 468 627 B1**
(45) Date de publication et mention de la délivrance du brevet: **02.03.2016**
(21) Numéro de dépôt: 11009514.8
(22) Date de dépôt: 01.12.2011
(51) Int. Cl.: B64C 27/82

(54) **Aéronef muni d'un rotor arrière basculant, et procédé associé**
Luftfahrzeug, das mit einem rückseitigen Kipprotor ausgestattet ist, und entsprechendes Verfahren
Aircraft provided with a tilting rear rotor and associated method

(30) Priorité: 22.12.2010 FR 1005016
(43) Date de publication de la demande: 27.06.2012
(73) Titulaire: Airbus Helicopters, 13725 Marignane Cedex (FR)
(72) Inventeur: Thomassey, Lionel, 13270 Fos Sur Mer (FR)
(74) Mandataire: GPI & Associés

(56) Documents cités:
- WO-A2-2009/102739
- BE-A- 466 905
- FR-A- 1 017 976
- US-A- 3 155 341
- US-A- 4 912 999
- US-A1- 2005 045 762

## Description

La présente invention concerne un procédé de pilotage d'un aéronef dont une voilure tournante est apte à assurer au moins partiellement la portance et la propulsion l'aéronef étant aussi muni d'un rotor arrière apte à pivoter autour d'un axe de basculement, ainsi qu'un tel aéronef à voilure tournante.

Plus particulièrement, l'invention se rapporte aux aéronefs munis d'une part d'une voilure tournante pour assurer au moins partiellement la portance de l'aéronef et, d'autre part d'un rotor arrière apte à contrer le couple en lacet généré par la voilure tournante sur la cellule de l'aéronef, ce rotor arrière pouvant pivoter autour d'un axe pour contribuer à la propulsion de l'aéronef.

En effet, les performances d'un hélicoptère sont classiquement limitées par la vitesse de rotation du rotor principal constituant la voilure tournante. La vitesse relative des pales de ce rotor principal par rapport à l'air environnant doit notamment être localement inférieure à la vitesse du son. Ainsi, à vitesse élevée, la durée de vie des composants est notamment réduite en raison de l'apparition de vibrations et à cause des contraintes introduites par le torseur mât généré par le pas cyclique.

Par conséquent, pour obtenir un aéronef à voilure tournante pouvant se déplacer à grande vitesse pour des raisons écologiques, de nature énergétique par exemple, il est concevable d'utiliser une source propulsive additionnelle pour notamment permettre l'accès à de grandes vitesses d'avancement.

Le document FR1511006 suggère l'utilisation d'une hélice propulsive caudale associée au rotor arrière anti-couple classique d'un hélicoptère. L'hélice caudale permet alors de décharger le rotor principal d'au moins une partie de sa fonction propulsive.

Pour optimiser les performances d'un hélicoptère, le document FR1017976 suggère d'utiliser un aéronef muni d'une voilure tournante et d'un rotor arrière apte à pivoter autour d'un axe de basculement.

Selon un mode de fonctionnement primaire, le rotor arrière est dans une première position afin de contrer le couple généré par la voilure tournante et de commander le mouvement en lacet de l'aéronef.

Selon un mode de fonctionnement secondaire, le rotor arrière bascule dans une deuxième position afin de participer à la propulsion de l'aéronef, la commande en lacet étant obtenue en orientant le rotor arrière de part et d'autre d'un emplacement neutre.

Dès lors, la première position est qualifiée par commodité dans la suite du texte de « première position fixe » dans la mesure où le rotor arrière est figé dans une position prédéterminée durant le mode de fonctionnement primaire, l'aéronef fonctionnant alors comme un hélicoptère classique. A l'inverse, la deuxième position est qualifiée par commodité dans la suite du texte de « deuxième position orientable » dans la mesure où le rotor arrière évolue dans un secteur angulaire prédéterminé durant le mode de fonctionnement secondaire.

Un tel aéronef est parfois dénommé « hélicoptère à poussée vectorielle ». Le document GB599990 présente aussi un aéronef de ce type.

Le document US3155341 présente un convertiplane muni d'un rotor principal, d'un rotor arrière basculant et d'une aile apte à passer d'un mode hélicoptère à un mode avion. Le convertiplane n'est pas un aéronef à poussée vectorielle, le palonnier étant déconnecté du rotor arrière en vol d'avancement.

Le document FR1536412 présente un mécanisme de commande pour pivoter un rotor arrière d'un convertiplane. Ce mécanisme comporte une seule sortie relative à la commande de pas des pales du rotor arrière et deux entrées pour la commande en lacet en mode hélicoptère et la commande de poussée en mode avion, la transition d'une commande à l'autre s'opérant de façon progressive. Ainsi, durant le mode de fonctionnement secondaire, la commande de lacet devient inopérante alors que durant le mode de fonctionnement primaire la commande de poussée est inopérante.

Dans ce contexte, la présente invention a alors pour objet de proposer un aéronef à voilure tournante apte à se déplacer à grande vitesse tout en étant écologique en termes notamment de consommation en carburant ainsi qu'un tel procédé de pilotage d'un tel aéronef.

L'arrière plan technologique inclut les documents US2004232280, FR2831933, FR2831934, FR2 831938, FR2842271, WO2009102739, US2005045762, FR1017976 et BE466905.

Le document US2004232280 présente un aéronef muni d'une cellule s'étendant le long d'un plan longitudinal antéropostérieur, la cellule portant une voilure tournante et un rotor arrière. Le rotor arrière exerce une poussée selon une direction fixe incluse dans le plan longitudinal antéropostérieur pour propulser l'aéronef. De plus, le mât portant la voilure tournante peut être incliné vers l'arrière de l'aéronef.

On note que l'on entend dans la suite du texte par « incliné vers l'arrière », un mât présentant avec un emplacement neutre un angle aigu pour rapprocher son extrémité libre solidarisée à la voilure tournante de l'extrémité arrière de l'aéronef. A l'inverse, on entend dans la suite du texte par « incliné vers l'avant », un mât présentant avec un emplacement neutre un angle aigu pour rapprocher son extrémité libre de l'extrémité avant de l'aéronef.

Un tel aéronef n'est pas un aéronef à poussée vectorielle dans la mesure où le rotor arrière n'est pas orientable pour contrôler le mouvement en lacet de cet aéronef.

Les documents FR2 831933, FR2831934 et FR2842271 présentent des boîtes de transmission de puissance basculantes, le document FR2831938 ayant pour objet une installation de lubrification pour une boîte de transmission de puissance basculante.

Dans un premier aspect, l'invention concerne un aéronef selon la revendication 1.

Cet aéronef peut fonctionner selon trois modes distincts, un premier mode de fonctionnement durant lequel l'aéronef fonctionne comme un hélicoptère classique, un deuxième mode de fonctionnement durant lequel l'aéronef fonctionne comme un hélicoptère à poussée vectorielle contrairement au document US3155341, et un troisième mode de fonctionnement durant lequel l'aéronef fonctionne sensiblement comme un autogire. Ces trois modes permettent donc d'adapter l'aéronef à l'environnement dans lequel il évolue suivant des critères écologiques et/ou de performances.

L'aéronef combine alors les avantages de trois types de giravions à voilure tournante de manière inédite. Ainsi, l'aéronef peut atteindre des vitesses relativement importantes en ayant une consommation de carburant modérée. Cet aéronef est alors écologique et peut parcourir de longues distances.

En effet, l'aéronef peut commencer son vol en évoluant selon le premier mode de fonctionnement pour par exemple décoller verticalement, bien que les autres modes permettent de décoller avec une vitesse d'avancement substantielle. Le moyen d'inclinaison peut incliner la voilure tournante vers l'extrémité avant suivant une inclinaison de décollage par exemple.

Durant une phase d'accélération faisant suite au décollage, pour atteindre plus rapidement une consigne de vitesse permettant la transition du premier mode de fonctionnement vers le deuxième mode de fonctionnement, le moyen d'inclinaison peut incliner la voilure tournante vers l'extrémité avant suivant une inclinaison de transition vers l'extrémité avant ayant 5° de plus par exemple par rapport à l'inclinaison de décollage de la configuration de décollage, cette inclinaison supplémentaire assurant une composante propulsive accrue.

Dans un second temps, pour atteindre le deuxième mode de fonctionnement, le rotor arrière est basculé par le moyen de pivotement, sur ordre du pilote ou sur ordre d'un moyen de commande requérant le basculement en fonction de paramètres prédéterminés tels que la vitesse d'avancement de l'aéronef par exemple. En parallèle, si la voilure tournante a été inclinée vers l'extrémité avant durant une phase d'accélération, la voilure tournante est éventuellement ramenée dans sa configuration de décollage de manière à présenter l'inclinaison de décollage pour limiter les contraintes exercées sur les composants de la voilure tournante.

La propulsion de l'aéronef est alors assurée principalement par le rotor arrière. L'aéronef est alors accéléré durant ce deuxième mode de fonctionnement.

Dans un dernier temps, pour atteindre le troisième mode de fonctionnement, le moyen d'inclinaison incline la voilure tournante vers l'extrémité arrière de l'aéronef. Durant ce troisième mode de fonctionnement, l'inclinaison de la voilure tournante permet à cette voilure tournante d'assurer la portance de l'aéronef sans nécessiter une puissance importante, voire même sans être entraînée en rotation par l'installation motrice. De plus, si la voilure tournante est déconnectée de l'installation motrice, il est possible d'adapter le régime de rotation de la voilure tournante indépendamment du régime de rotation du rotor arrière en mode propulseur en jouant sur l'inclinaison du mât.

La puissance générée par l'installation motrice est alors principalement utilisée pour l'entraînement du rotor arrière lié au fait que la chaine cinématique d'entrainement du rotor arrière ne transite pas par la boîte de transmission principale mais sort directement de l'installation motrice, ce rotor arrière assurant seul la propulsion de l'aéronef.

Par conséquent, l'invention permet d'incliner la voilure tournante vers l'extrémité arrière de l'aéronef pour mettre la voilure tournante en autorotation ce qui lui confère une meilleure finesse (si le rotor est à plat) et permet le délestage de la boîte de transmission principale de cette voilure tournante. Cette inclinaison vers l'arrière autorise un dimensionnement optimisé de la boîte de transmission principale pour répondre à la fonction portance.

De plus, la latitude offerte sur l'inclinaison du rotor principal vers l'arrière ou l'avant permet de diminuer les moments du mât d'entrainement de la voilure tournante et donc d'optimiser le dimensionnement de ce mât, dans la mesure où on sollicite beaucoup moins le rotor principal avec des commandes cycliques. Cette caractéristique est d'autant plus vraie lors de la propulsion de l'aéronef par le rotor arrière durant le troisième mode de fonctionnement. Il en résulte une réduction des contraintes exercées sur la voilure tournante, et par suite une augmentation des durées de vie des composants et / ou un gain de masse par rapport à un aéronef classique. Le rotor arrière pivotant assurant la commande en lacet et la poussée vectorielle dans les deuxième et troisième modes apporte à l'aéronef une grande manoeuvrabilité.

Dès lors, on obtient de manière surprenante un aéronef à la fois écologique, rapide et à haute manoeuvrabilité.

De manière à délester la voilure tournante tout en allant plus vite que ce soit selon le deuxième mode de fonctionnement ou le troisième mode de fonctionnement, l'aéronef peut être équipé de parties fixes lui permettant d'accueillir au moins une aile s'étirant de part et d'autre de la cellule de l'aéronef. Cette aile assure une portance supplémentaire en vol d'avancement, peut jouer le rôle de bras d'emport pour toutes charges externes et peut accueillir des réservoirs supplémentaires pour accroître la distance franchissable de l'aéronef par exemple.

La mise en oeuvre combinée d'un moyen de pivotement et d'un moyen d'inclinaison, et non pas la juxtaposition de ces moyens, permet l'obtention d'un aéronef apte à voler à une vitesse relativement importante avec une consommation de carburant relativement faible.

L'aéronef peut de plus comporter une ou plusieurs des caractéristiques qui suivent.

Ainsi, le moyen d'inclinaison peut agir de manière réversible sur le mât d'un rotor principal de la voilure tournante, dit plus simplement « mât » ou encore « mât d'entraînement », pour l'incliner dans le plan longitudinal antéropostérieur vers l'extrémité avant dudit aéronef durant le premier mode de fonctionnement et le deuxième mode de fonctionnement.

Le mât et la voilure tournante associée se trouvant dans une position médiane lorsqu'il n'est dirigé ni vers l'extrémité avant ni vers l'extrémité arrière, le moyen d'inclinaison peut incliner le mât vers l'extrémité arrière sur une première plage allant de 0 à 5 ° par exemple et vers l'extrémité avant sur une deuxième plage allant de 0 à 5 ° par exemple.

En outre, l'aéronef peut comporter un premier moyen de désolidarisation entre la boîte de transmission principale de puissance et l'installation motrice, telle qu'une roue libre dénommée par commodité « roue libre avant » par exemple.

Ainsi, lorsque la voilure tournante est inclinée vers l'extrémité arrière de l'aéronef durant le troisième mode de fonctionnement, cette voilure tournante peut être mise en mouvement uniquement par le vent incident. L'intégralité de la puissance fournie par cette installation motrice est alors transmise au rotor arrière.

La roue libre avant permet notamment une désolidarisation de la voilure tournante vis-à-vis de l'installation motrice et du rotor arrière.

En effet, la roue libre avant comprend un organe menant avant entraîné par l'installation motrice et un organe mené avant entraînant la boîte de transmission principale de puissance. La roue libre avant permet alors l'entraînement de l'organe mené avant par l'organe menant avant.

De même, l'aéronef peut comporter un deuxième moyen de désolidarisation entre la boîte de transmission arrière de puissance et l'installation motrice, telle qu'une roue libre dénommée par commodité « roue libre arrière » par exemple.

En effet, la roue libre arrière comprend un organe menant arrière entraîné par l'installation motrice et un organe mené arrière entraînant la boîte de transmission arrière de puissance. La roue libre arrière permet alors l'entraînement de l'organe mené arrière par l'organe menant arrière.

Selon un autre aspect, l'installation motrice peut comprendre au moins un moteur en prise sur un moyen de partage de la puissance développée, le moyen de partage entraînant une chaîne cinématique principale reliée à la boîte de transmission principale de puissance, le moyen de partage entraînant une chaîne cinématique arrière reliée à ladite boîte de transmission arrière de puissance.

Ainsi, la voilure tournante et le rotor arrière sont chacun mis en mouvement par le moyen de partage via une chaîne cinématique dédiée. Le moyen de partage permet de diminuer les niveaux de couple vus par la boîte de transmission principale ce qui permet un dimensionnement optimisé de cette boîte de transmission principale se traduisant par un gain de masse et donc de charge utile renforçant le caractère écologique de l'aéronef.

Les roues libres avant et arrière mentionnées précédemment peuvent être incluses dans ce moyen de partage, ou encore se trouver respectivement entre le moyen de partage et la voilure tournante ou le rotor arrière.

Par ailleurs, la voilure tournante comportant une pluralité de premières pales ayant un premier pas variable commandé par des commandes de vol reliées à des servocommandes actionnant un plateau cyclique, l'aéronef peut comporter un moyen de compensation pour que l'inclinaison dudit mât ne modifie pas la position desdites commandes de vol et desdites servocommandes sans action du pilote.

Par exemple, un levier de renvoi coopère avec un organe affecté par le moyen d'inclinaison pour maintenir dans une position fixe les commandes lors du basculement de la voilure tournante.

De plus, le moyen d'inclinaison peut coopérer avec la boîte de transmission principale de puissance pour incliner le mât portant la voilure tournante.

Dès lors, on comprend que le moyen d'inclinaison peut agir directement sur le mât pour l'incliner, ou indirectement via la boîte de transmission principale de puissance par exemple.

Il est alors concevable de mettre en oeuvre une boîte de transmission principale de puissance basculante du type décrit par les documents FR2831933, FR2831934, FR2831938, FR2842271 par exemple.

Outre un aéronef selon la revendication 1, l'invention concerne un procédé selon la revendication 9 pour piloter un tel aéronef.

Le pilotage de la position du rotor arrière et de la position de la voilure tournante peut être réalisé par des commandes prévues à cet effet, et 1 ou éventuellement par un moyen de contrôle mettant en oeuvre des lois de pilotage prédéterminées par le constructeur en fonction par exemple de la masse de l'aéronef, de la vitesse d'avancement à atteindre, des perturbations aérologiques voire de l'altitude et de la température extérieure.

L'invention a pour objets un aéronef à voilure tournante selon la revendication 1 et un procédé pour piloter un tel aéronef selon la revendication 9. Ses avantages apparaîtront avec plus de détails dans le cadre de la description qui suit avec des exemples de réalisation donnés à titre illustratif en référence aux figures annexées qui représentent :
- la figure 1, une vue de dessus d'un aéronef selon l'invention permettant d'expliciter le procédé mis en oeuvre,
- les figures 2 à 5, des schémas explicitant le fonctionnement de l'aéronef,
- la figure 6, un schéma présentant les moyens de pivotement et d'inclinaison,
- les figures 7 et 8, des schémas présentant un moyen d'inclinaison coopérant avec une boîte de transmission principale de puissance, et
- la figure 9, un schéma explicitant un moyen de compensation.

Les éléments présents dans plusieurs figures distinctes sont affectés d'une seule et même référence.

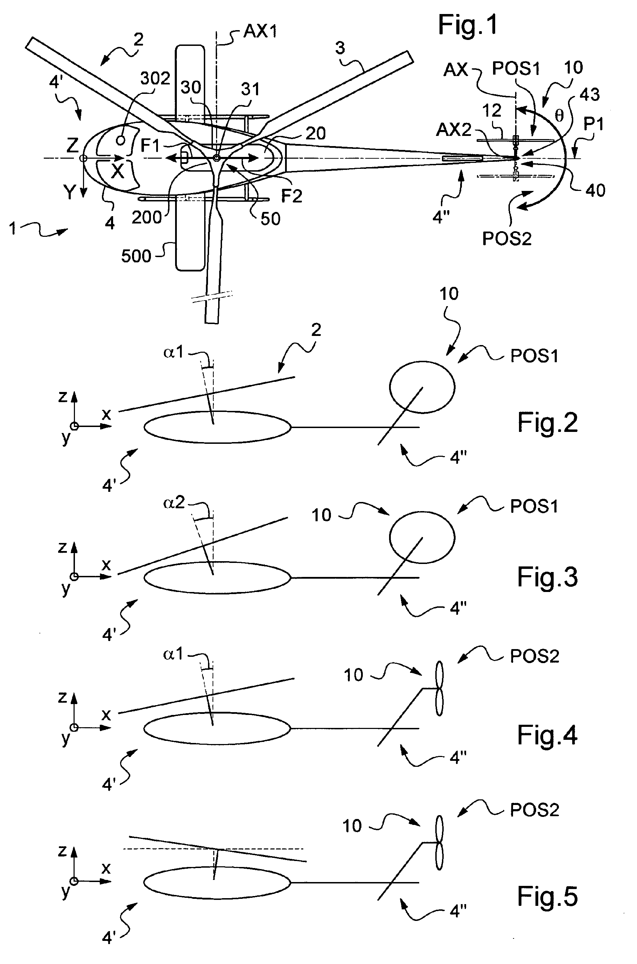

La figure 1 présente une vue de dessus d'un aéronef 1 selon l'invention.

On note que trois directions X, Y et Z orthogonales les unes par rapport aux autres sont représentées sur la figure 1.

La direction X représente l'axe longitudinal de l'aéronef schématisé alors qu'une autre direction Y représente l'axe transversal de cet aéronef.

Enfin, une troisième direction Z est dite d'élévation et correspond à l'axe en élévation de l'aéronef.

La figure 1 présente alors un aéronef 1 muni d'une cellule 4 s'étendant longitudinalement le long d'un plan longitudinal antéropostérieur P1 de symétrie en élévation d'une extrémité avant 4' vers une extrémité arrière 4". On note que le plan longitudinal antéropostérieur P1 est défini par l'axe longitudinal X et l'axe en élévation Z.

La cellule 4 porte une voilure tournante 2 munie d'un rotor principal comportant une pluralité de premières pales 3. L'aéronef possède alors des organes de modification du premier pas des premières pales 3, tels qu'un ensemble de plateaux cycliques commandé par un manche cyclique apte à faire varier cycliquement le premier pas des premières pales 3 et un levier de pas collectif apte à faire varier collectivement le premier pas de l'ensemble des premières pales 3.

De plus, l'extrémité arrière 4" de la cellule 4 porte un rotor arrière 10 muni d'une pluralité de deuxièmes pales 12 effectuant une rotation autour d'un axe de rotation AX, le deuxième pas des deuxièmes pales 12 étant modifiable.

Le rotor arrière 10 peut en outre effectuer une rotation autour d'un axe de basculement AX2 pour passer d'une première position POS1 fixe représentée en gras durant laquelle le rotor arrière exerce une force pour contrôler le mouvement en lacet de l'aéronef, vers une deuxième position POS2 représentée par le secteur angulaire θ durant lequel le rotor arrière 10 peut être déplacé dans ledit secteur angulaire θ pour contrôler le mouvement en lacet de l'aéronef et au moins participer à la propulsion.

Dans la première position POS1, l'axe de rotation AX des deuxièmes pales du rotor arrière 10 est fixe en étant par exemple orthogonal au plan longitudinal antéropostérieur P1 pour contrecarrer le couple en lacet généré par la voilure tournante 2 sur la cellule 4. A contrario, dans la deuxième position orientable, cet axe de rotation AX peut effectuer une rotation autour de l'axe de basculement AX2 afin de diriger la masse d'air traversant le rotor arrière 10 vers l'arrière de l'aéronef. Le rotor arrière 10 pivote donc de part et d'autre du plan longitudinal antéropostérieur P1 pour d'une part participer à la propulsion de l'aéronef et d'autre part contrôler le mouvement en lacet de cet aéronef. Par exemple, le secteur angulaire θ dans lequel évolue l'axe de rotation du rotor arrière 10 varie dans une plage de 180° en allant de la position du rotor arrière 10 représentée en traits pleins sur la figure 1 vers la position du rotor arrière 10 représentée en pointillés sur cette figure 1.

Pour piloter le rotor arrière 10, le pilote peut utiliser un premier moyen de commande tel qu'un palonnier, et un deuxième moyen de commande, un bouton poussoir analogique par exemple.

Dans la première position, on utilise plus précisément le premier moyen de commande pour modifier le deuxième pas des deuxièmes pales 12 du rotor arrière 10. Ainsi, à l'aide du premier moyen de commande, le pilote contrôle le mouvement en lacet de l'aéronef 1 en pilotant l'amplitude de la poussée générée par ce rotor arrière 10.

En parallèle, le deuxième moyen de commande 302 est désactivé par sécurité.

Par contre, dans la deuxième position POS2, on utilise le premier moyen de commande pour orienter le rotor arrière 10 par rapport au plan longitudinal antéropostérieur P1, et le deuxième moyen de commande pour modifier le deuxième pas des deuxième pales 12. Dès lors, le pilote contrôle toujours le mouvement en lacet de l'aéronef à l'aide du premier moyen de commande, mais contrôle la vitesse d'avancement de l'aéronef à l'aide du deuxième moyen de commande 302 notamment.

Le passage d'une position à une autre du rotor arrière peut être requis par un moyen de commutation manoeuvrable par le pilote ou encore par un moyen de contrôle en fonction de lois de pilotages prédéterminées.

Par ailleurs, l'aéronef 1 comporte une installation motrice 20 mettant en rotation un mât 31 portant la voilure tournante 2 au travers d'une boîte de transmission principale 30 de puissance, cette installation motrice 20 mettant de plus en rotation le rotor arrière 10 au travers d'une boîte de transmission arrière 40 de puissance.

Dès lors, l'aéronef 1 comporte un moyen de pivotement 43 commandé par le palonnier dans le deuxième mode pour changer la position du rotor arrière, le moyen de pivotement permettant de basculer le rotor arrière de la première position POS1 fixe vers une deuxième position POS2 ajustable dans un secteur angulaire θ donné, et inversement.

Par exemple, la boîte de transmission arrière de puissance comporte une partie fixe liée à la cellule 4 et une partie mobile par rapport à cette cellule 4. Le moyen de pivotement déplace autour d'un axe de basculement AX2 alors la partie mobile de boîte de transmission arrière de puissance par rapport à la partie fixe de cette boîte de transmission arrière de puissance.

De même, l'aéronef 1 comporte un moyen d'inclinaison 50 de la voilure tournante pour déplacer le mât 31 dans le plan longitudinal antéropostérieur P1, de part et d'autre d'un emplacement neutre 200 de l'extrémité avant 4' vers l'extrémité arrière 4" et inversement.

Ainsi, le moyen d'inclinaison 50 peut incliner le mât 31 vers l'extrémité avant selon la flèche F1 d'une inclinaison avant comprise entre 0° et un premier angle donné, de l'ordre de 10° par exemple. De même, le moyen d'inclinaison 50 peut incliner le mât 31 vers l'extrémité arrière selon la flèche F2 d'une inclinaison arrière comprise entre 0° et un deuxième angle donné, de l'ordre de 5° par exemple.

Cette inclinaison commandée par l'organe 300 permet à la fois de générer une force de propulsion plus grande mais aussi de gérer l'assiette de l'appareil en stationnaire ou en croisière en fonction de son centrage. Ceci permet de réduire la trainée et améliorer le confort passager.

Durant un premier mode de fonctionnement, on agence le rotor arrière 10 dans la première position POS1.

En référence à la figure 2, au décollage, la voilure tournante 2 est dans une position de décollage afin que le mât 31 présente une inclinaison vers l'extrémité avant 4, une inclinaison de décollage α1 vers l'extrémité avant par exemple.

En référence à la figure 3, suite au décollage on peut de nouveau incliner la voilure tournante 2 afin que le mât 31 présente une inclinaison de transition α2 vers l'extrémité avant supérieure à l'inclinaison de décollage α1 présentée durant le décollage. Dans ce même premier mode de fonctionnement une inclinaison supplémentaire vers l'avant permet d'aller plus vite et d'atteindre une consigne de vitesse autorisant la transition plus rapidement vers le deuxième mode avant même d'avoir recours au pivotement du rotor arrière.

L'aéronef se pilote alors comme un hélicoptère.

En référence à la figure 4, durant un deuxième mode de fonctionnement visant à accélérer la vitesse d'avancement de l'aéronef, on agence le rotor arrière 10 dans la deuxième position POS2 orientable à l'aide du moyen de pivotement, et on pilote la voilure tournante 2 afin que le mât 31 présente une inclinaison vers l'extrémité avant 4' comprise entre un angle nul et un premier angle donné. Eventuellement, on ramène la voilure tournante 2 dans sa position de décollage afin que cette voilure tournante présente l'inclinaison de décollage α1 pour limiter les contraintes exercées sur cette voilure tournante.

Un premier moyen de commande permet d'orienter le rotor arrière 10 via le moyen de pivotement par rapport au plan longitudinal antéropostérieur P1 dans le secteur angulaire θ prédéfini pour contrôler le mouvement en lacet de l'aéronef, et un deuxième moyen de commande modifie le deuxième pas des deuxièmes pales 12 du rotor arrière pour contrôler la vitesse d'avancement.

Enfin, en référence à la figure 5, durant un troisième mode de fonctionnement, on maintient le rotor arrière 10 dans la deuxième position POS2, mais on pilote la voilure tournante 2 afin que le mât 31 présente une inclinaison vers l'extrémité arrière 4" comprise entre un angle nul et un deuxième angle donné 5° par exemple.

La puissance de l'installation motrice est au moins principalement, voire totalement, délivrée au rotor arrière pour atteindre une vitesse d'avancement importante grâce au moyen de partage 70.

L'aéronef est alors un aéronef fonctionnant selon trois modes distincts.

En référence à la figure 1, on note que l'aéronef peut comporter une aile 500. Durant le deuxième mode de fonctionnement et le troisième mode de fonctionnement, l'ajout d'une aile permet de délester la voilure tournante à grande vitesse. Cette aile peut être équipée ou non de réservoir carburant supplémentaire et / ou d'emport de charges lourdes.

Le pilote peut utiliser un moyen de commutation pour changer de mode de fonctionnement.

Selon une variante, on comprend qu'un système de pilotage automatique peut aussi actionner ce moyen de commutation 40 en fonction de lois de pilotage préétablies par le constructeur.

Par exemple, on passe du premier mode de fonctionnement au deuxième mode de fonctionnement à compter d'une première vitesse d'avancement seuil. On passe du deuxième mode de fonctionnement au troisième mode de fonctionnement pour minimiser la puissance transitant par une boîte de transmission principale de la voilure tournante et en même temps pour envoyer la plupart de la puissance générée par les moteurs de l'aéronef au rotor arrière afin d'accroître la vitesse de l'aéronef. Un moyen permettant au pilote d'annihiler lesdites lois de pilotage est aussi envisageable.

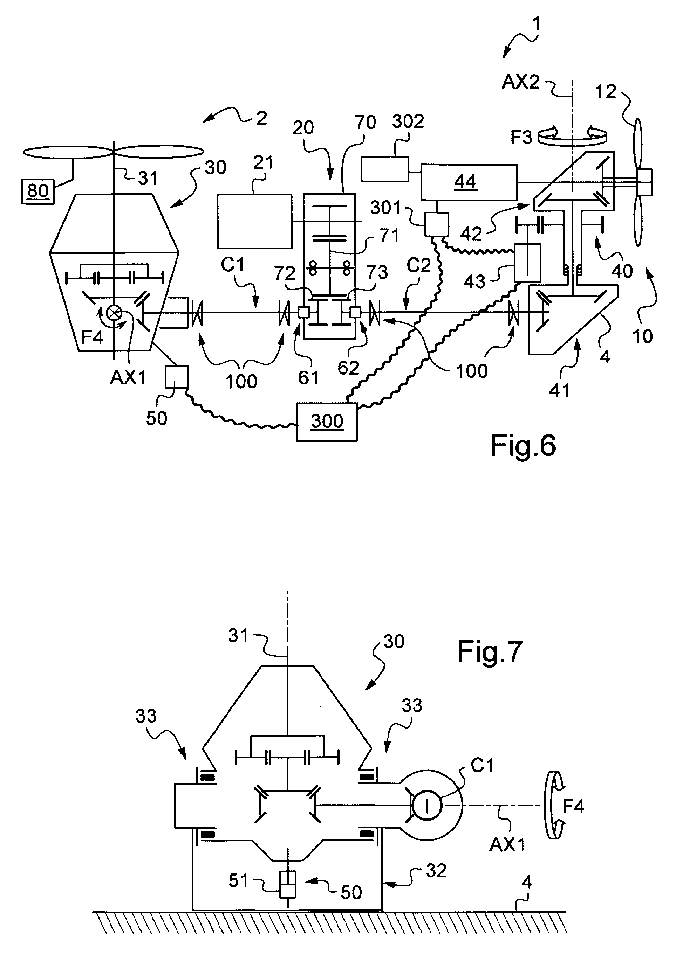

La figure 6 présente un schéma présentant les moyens de pivotement et d'inclinaison.

La boîte de transmission arrière de puissance comportant une partie fixe 41 fixée à la cellule 4 et une partie mobile 42 portant le rotor arrière 10, le moyen de pivotement 43 est par exemple un moteur mettant en rotation la partie mobile 42 par rapport à la partie fixe 41 autour d'un axe de basculement AX2.

Cette figure 6 fait aussi apparaître des moyens de commande du pas des deuxièmes pales 12 du rotor arrière 10.

Par ailleurs, le moyen d'inclinaison 50 peut agir sur la boîte de transmission principale 30 de puissance pour incliner le mât 31, en basculant cette boîte de transmission principale 30 de puissance autour d'un axe d'inclinaison AX1 de part et d'autre d'un emplacement neutre selon la double flèche F4.

Pour entraîner la boîte de transmission principale 30 de puissance et la boîte de transmission arrière 40 de puissance, l'aéronef comporte une installation motrice 20 munie d'au moins un moteur 21 mettant en mouvement une chaîne cinématique principale C1 reliée à la boîte de principale 30 et une chaîne cinématique arrière C2 reliée à la boîte de transmission arrière 40 de puissance.

Un moyen de partage 70 peut être disposé entre chaque chaîne cinématique et le ou les moteurs de l'installation motrice 20.

Dès lors, chaque moteur entraîne un train de pignons de répartition 71 du moyen de partage 70, le pignon de répartition 71 engrenant un pignon avant 72 lié à la chaîne cinématique principale C1 et un pignon arrière 73 lié à la chaîne cinématique arrière C2.

Par ailleurs, l'aéronef 1 peut comporter un premier moyen de désolidarisation 61 entre la boîte de transmission principale 30 de puissance et l'installation motrice 20, ainsi qu'un deuxième moyen de désolidarisation 62 entre la boîte de transmission arrière 40 de puissance et l'installation motrice 20. Les moyens de désolidarisation peuvent être du type roue libre ou embrayage par exemple.

De même, une roue libre peut être agencée entre chaque moteur et le moyen de partage.

Pour piloter l'aéronef 1, un pilote utilise des commandes de vol 80 agissant sur le pas des premières pales de la voilure tournante 2, tel qu'un levier de pas collectif et un manche de commande cyclique des pales de la voilure tournante.

De plus, ce pilote utilise un premier moyen de commande 301 de type palonnier par exemple pour contrôler le mouvement en lacet, voire un deuxième moyen de commande 302 pour contrôler la poussée générée par le rotor arrière durant le deuxième mode de fonctionnement et le troisième mode de fonctionnement.

Le moyen de commutation 300 automatique ou manoeuvrable par le pilote, permet de passer d'un mode de fonctionnement à un autre.

Quel que soit le mode de fonctionnement, le pilote contrôle le pas collectif des premières pales de la voilure tournante avec le levier de pas collectif, et le pas cyclique des premières pales de la voilure tournante avec le manche de commande cyclique. L'inclinaison du mât 31 peut être gérée par le moyen de commutation 300 ou encore par un organe dédié, pilotable par le pilote.

Durant le premier mode de fonctionnement, le pilote contrôle le mouvement en lacet de l'aéronef avec le premier moyen de commande 301, ce premier moyen de commande 301 agissant sur une servocommande 44 liée aux deuxièmes pales du rotor arrière.

Le deuxième moyen de commande 302 est alors inactif.

Pour passer du premier mode de fonctionnement au deuxième mode de fonctionnement, le moyen de commutation 300 ordonne au moyen de pivotement de pivoter le rotor arrière 10. A partir d'un seuil angulaire, le moyen de commutation 300 relie le premier moyen de commande 301 au moyen de pivotement et active le deuxième moyen de commande 302.

A l'aide du premier moyen de commande 301, le pilote commande alors le mouvement en lacet via le moteur de pivotement 43. De plus, ce pilote modifie le pas collectif des deuxième pales 12 pour gérer la poussée du rotor arrière à l'aide du deuxième moyen de commande 302 qui agit sur ladite servocommande 44.

Pour passer du deuxième mode de fonctionnement au troisième mode de fonctionnement, le moyen de commutation 300 ordonne au moyen d'inclinaison 50 d'incliner le mât 31 vers l'extrémité arrière 4" de l'aéronef, selon un angle prédéterminé éventuellement réglable à l'aide dudit organe dédié.

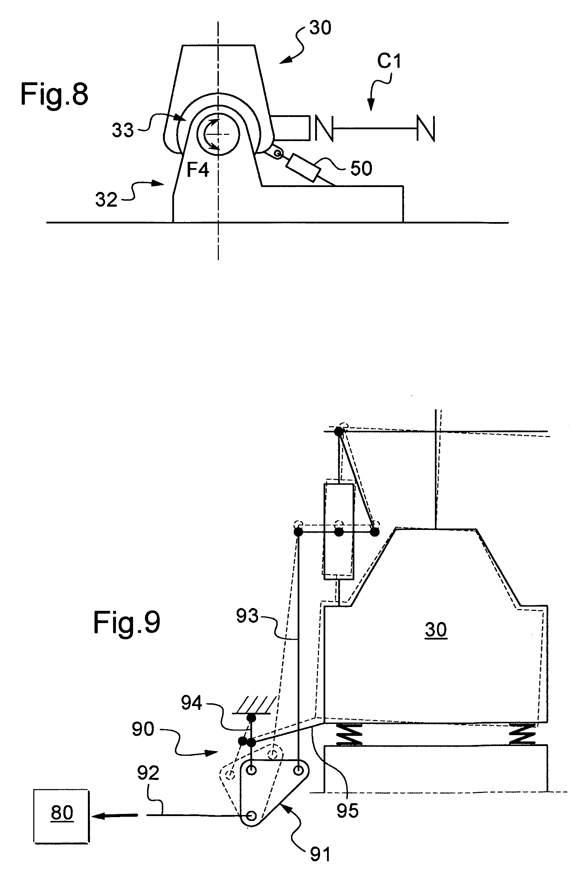

En référence aux figures 7 et 8 pour incliner le mât 31, le moyen d'inclinaison 50 peut comporter un vérin basculant la boîte de transmission principale 30 de puissance.

Cette boîte de transmission principale 30 de puissance est alors agencée sur une nacelle 32 fixée à la cellule 4, via par exemple des paliers 33.

On se référera à la littérature pour trouver des exemples de réalisation de boîte de transmission de puissance basculante, associée notamment à des moyens de lubrification apte à alimenter une telle boîte de transmission.

Par ailleurs, la figure 9 présente un moyen de compensation 90 qui permet de ne pas introduire de déplacement du levier du distributeur des servocommandes lors d'une inclinaison de la voilure tournante 2 et de son mât 31 surtout si le pilote maintient ses commandes 80 dans une position fixe de consigne de pas cyclique ou de pas collectif des premières pales.

Le moyen de compensation 90 comporte un levier de renvoi 91 relié aux commandes de vol 80 par une bielle d'entrée 92. Cette bielle d'entrée 92 est alors articulée à une extrémité du levier de renvoi 91 et à une chaîne cinématique commandée par lesdites commandes de vol 80.

De plus, ce levier de renvoi 91 est relié au levier du distributeur d'une servocommande de commande du pas des premières pales de la voilure tournante 2 par une bielle de sortie 93, et à la cellule 4 par une bielle de fixation 94.

Quand le pilote manoeuvre les commandes de vol 80, le levier de renvoi 91 effectue une rotation par rapport à la cellule et exerce un effort sur les pales via notamment la bielle de sortie 93.

Par ailleurs, le moyen de compensation comprend une bielle de compensation 95 articulée à la bielle de fixation et au carter de la boîte de transmission principale 30 de puissance.

Une inclinaison de cette boîte de transmission principale 30 de puissance provoque alors un mouvement du moyen de compensation représenté en pointillés sur la figure 9, ce mouvement n'engendrant pas un déplacement des commandes de vol 80 et n'engendrera pas par ailleurs un déplacement du levier du distributeur des servocommandes actionnant le plateau cyclique.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) à voilure tournante muni d'une cellule (4) s'étendant d'une extrémité arrière (4") vers une extrémité avant (4') le long d'un plan longitudinal antéropostérieur (P1), ladite cellule (4) portant la voilure tournante (2) apte à assurer au moins partiellement la portance et la propulsion de l'aéronef (1) et un rotor arrière (10) ; le rotor arrière (10) étant apte à pivoter pour être soit dans une première position (POS1) fixe dans laquelle ledit rotor arrière (10) sert à contrôler le lacet dudit aéronef (1) soit dans une deuxième position (POS2), ledit aéronef (1) évoluant dans un premier mode de fonctionnement lorsque ledit rotor arrière (10) est dans ladite première position (POS1), ledit aéronef (1) ayant une instillation motrice (20) entraînant ladite voilure tournante (2) par le biais d'une boîte de transmission principale (30) de puissance solidaire d'un mât (31) de ladite voilure tournante (2), ladite installation motrice (20) entraînant ledit rotor arrière (10) par le biais d'une boîte de transmission arrière (40) de puissance, ladite boîte de transmission arrière (40) de puissance étant pourvue d'une partie fixe (41) solidarisée à ladite cellule (4) et d'une partie mobile (42) liée audit rotor arrière (10) pour permettre le pivotement dudit rotor arrière (10),
l'aéronef (1) à voilure tournante comportant :
- un moyen de pivotement (43) de ladite partie mobile (42) basculant de manière réversible le rotor arrière (10) de ladite première position (POS1) vers ladite deuxième position (POS2) pour que ledit aéronef passe du premier mode de fonctionnement à un deuxième mode de fonctionnement, ladite deuxième position étant ajustable, ledit moyen de pivotement pivotant le rotor arrière autour d'un axe de basculement (AX2) afin d'orienter ladite deuxième position dudit rotor arrière (10) par rapport au plan longitudinal antéropostérieur (P1) dans un secteur angulaire prédéfini pour contrôler le mouvement en lacet et pour contrôler au moins partiellement la propulsion dudit aéronef (1) durant le deuxième mode de fonctionnement,
**caractérisé en ce que** il comporte
- un moyen d'inclinaison (50) inclinant de manière réversible ledit mât (31) dans le plan longitudinal antéropostérieur (P1) vers l'extrémité arrière (4") dudit aéronef pour que ledit aéronef passe du deuxième mode fonctionnement vers un troisième mode de fonctionnement durant lequel la propulsion de l'aéronef est assuré uniquement par le rotor arrière (10).

2. Aéronef à voilure tournante (1) selon la revendication 1,
**caractérisé en ce que** ledit moyen d'inclinaison (50) agit de manière réversible sur ledit mât (31) pour incliner ce mât (31) dans le plan longitudinal antéropostérieur (P1) vers l'extrémité avant (4') dudit aéronef durant le premier mode de fonctionnement et/ou le deuxième mode de fonctionnement.

3. Aéronef à voilure tournante (1) selon l'une quelconque des revendications 1 à 2,
**caractérisé en ce qu'**il comporte un premier moyen de désolidarisation (61) entre ladite boîte de transmission principale (30) de puissance et ladite installation motrice (20).

4. Aéronef à voilure tournante (1) selon l'une quelconque des revendications 1 à 3,
**caractérisé en ce qu'**il comporte un deuxième moyen de désolidarisation (62) entre ladite boîte de transmission arrière (40) de puissance et ladite installation motrice (20).

5. Aéronef à voilure tournante (1) selon l'une quelconque des revendications 1 à 4,
**caractérisé en ce que** ladite installation motrice (20) comprend au moins un moteur (21) en prise sur un moyen de partage (70) de la puissance développée, ledit moyen de partage (70) entraînant une chaîne cinématique principale (C1) reliée à ladite boîte de transmission principale (30) de puissance, ledit moyen de partage (70) entraînant une chaîne cinématique arrière (C2) reliée à ladite boîte de transmission arrière (40) de puissance.

6. Aéronef à voilure tournante (1) selon l'une quelconque des revendications 1 à 5,
**caractérisé en ce que** ladite voilure tournante (2) comportant une pluralité de premières pales (3) ayant un premier pas variable commandé par des commandes de vol (80) reliées à des servocommandes actionnant un plateau cyclique, ledit aéronef (1) comporte un moyen de compensation (90) pour que l'inclinaison dudit mât (31) ne modifie pas la position desdites commandes de vol (80) et desdites servocommandes sans action du pilote.

7. Aéronef à voilure tournante (1) selon l'une quelconque des revendications 1 à 6,
**caractérisé en ce que** ledit moyen d'inclinaison (50) coopère avec ladite boîte de transmission principale (30) de puissance pour incliner ledit mât (31).

8. Aéronef à voilure tournante (1) selon l'une quelconque des revendications 1 à 7,
**caractérisé en ce qu'**il comporte au moins une aile (500) s'étendant de part et d'autre de ladite cellule.

9. Procédé pour piloter un aéronef (1) à voilure tournante muni d'une cellule (4) s'étendant d'une extrémité arrière (4") vers une extrémité avant (4') le long d'un plan longitudinal antéropostérieur (P1), ladite cellule (4) portant une voilure tournante (2) apte à assurer au moins partiellement la portance et la propulsion de l'aéronef (1) et un rotor arrière (10), ledit aéronef (1) ayant une installation motrice (20) entraînant ladite voilure tournante (2) par le biais d'une boîte de transmission principale (30) de puissance solidaire d'un mât (31) de ladite voilure tournante (2), ladite installation motrice (20) entraînant ledit rotor arrière (10) par le biais d'une boîte de transmission arrière (40) de puissance, ladite boîte de transmission arrière (40) de puissance étant pourvue d'une partie fixe (41)
solidarisée à ladite cellule (4) et d'une partie mobile (42) liée audit rotor arrière (10), ledit aéronef comportant un moyen de pivotement (43) de ladite partie mobile (42) pour basculer de manière réversible le rotor arrière (10) d'une première position (POS1) fixe dans laquelle ledit rotor arrière (10) sert à contrôler le lacet dudit aéronef (1) vers une deuxième position (POS2) orientable durant laquelle ledit rotor arrière (10) pivote autour d'un axe de basculement (AX2) pour contrôler le mouvement en lacet et pour contrôler au moins partiellement la propulsion dudit aéronef (1), ledit aéronef (1) comportant un moyen d'inclinaison (50) pour incliner ledit mât (31) dans le plan longitudinal antéropostérieur (P1) vers l'extrémité arrière (4") ou vers l'extrémité avant (4') de part et d'autre d'un emplacement neutre (200), au cours duquel :
- durant un premier mode de fonctionnement, on pilote ledit rotor arrière (10) pour l'agencer dans ladite première position (POS1) et on pilote ladite voilure tournante (2) afin que ledit mât (31) présente une inclinaison vers ladite extrémité avant (4') comprise entre un angle nul et un premier angle donné,
- durant un deuxième mode de fonctionnement, on pilote ledit rotor arrière (10) pour l'agencer dans ladite deuxième position (POS2) orientable et on pilote ladite voilure tournante (2) afin que ledit mât (31) présente une inclinaison vers ladite extrémité avant (4') comprise entre un angle nul et le premier angle donné,
- durant un troisième mode de fonctionnement, on pilote ledit rotor arrière (10) pour l'agencer dans ladite deuxième position (POS 2) et on pilote la vitesse de rotation de ladite voilure tournante (2) par l'inclinaison du mât (31) vers ladite extrémité arrière (4") comprise entre un angle nul et un deuxième angle donné.

## Patentansprüche

1. Drehflügel-Luftfahrzeug (1) mit einem Rumpf (4), der sich von einem hinteren Ende (4") bis zu einem vorderen Ende (4') entlang einer anteroposterioren Längsebene (P1) erstreckt, wobei der Rumpf (4) den Drehflügel (2) trägt, der mindestens teilweise den Auftrieb und den Vortrieb des Luftfahrzeugs (1) gewährleisten kann, und einen hinteren Rotor (10), wobei der hintere Rotor (10) verschwenkt werden kann, um entweder in einer ersten festen Stellung (POS1) zu sein, in der der hintere Rotor (10) dazu dient die Gierbewegung des Luftfahrzeugs (1) zu steuern, oder in einer zweiten Stellung (POS2) zu sein, wobei das Luftfahrzeug (1) in einem ersten Betriebsmodus fliegt, wenn der hintere Rotor (10) sich in der ersten Stellung (POS1) befindet, wobei das Luftfahrzeug (1) eine Antriebsanlage (20) aufweist, die den Drehflügel (2) über ein Hauptleistungsgetriebe (30) antreibt, das mit einer Rotorwelle (31) des Drehflügels (2) fest verbunden ist, wobei die Antriebsanlage (20) den hinteren Rotor (10) über ein hinteres Leistungsgetriebe (40) antreibt, wobei das hintere Leistungsgetriebe (40) mit einem festen Teil (41), der an dem Rumpf (4) befestigt ist, und einem beweglichen Teil (42), der mit dem hinteren Rotor (10) verbunden ist, um das Verschwenken des hinteren Rotors (10) zu ermöglichen, versehen ist, wobei das Drehflügelluftfahrzeug (1) aufweist:
- ein Mittel (43) zum Verschwenken des beweglichen Teils (42), wodurch umkehrbar der hintere Rotor (10) aus der ersten Stellung (POS 1) in die zweite Stellung (POS2) verschwenkt, damit das Luftfahrzeug von dem ersten Betriebsmodus in einen zweiten Betriebsmodus übergeht, wobei die zweite Position einstellbar ist, wobei das Mittel zum Verschwenken den hinteren Rotor um eine Schwenkachse (AX2) verschwenkt, um die zweite Stellung des hinteren Rotors (10) relativ zu der anteroposterioren Längsebene (P1) in einem vorbestimmten Winkelbereich zu orientieren, um die Gierbewegung zu steuern und um mindestens teilweise den Vortrieb des Luftfahrzeugs (1) während des zweiten Betriebsmodus zu steuern,
**dadurch gekennzeichnet, dass** es aufweist
- ein Neigungsmittel (50), welches reversibel die Rotorwelle (31) in der anteroposterioren Längsebene (P1) zum hinteren Ende (4") des Luftfahrzeugs neigt, damit das Luftfahrzeugs von dem zweiten Betriebsmodus in einen dritten Betriebsmodus übergeht, während dem der Vortrieb des Luftfahrzeugs ausschließlich durch den hinteren Rotor (10) sichergestellt wird.

2. Drehflügel-Luftfahrzeugs (1) nach Anspruch 1,
**dadurch gekennzeichnet, dass** das Neigungsmittel (50) umkehrbar auf die Rotorwelle (31) wirkt, um diese Rotorwelle (31) in der anteroposterioren Längsebene (P1) zum vorderen Ende (4') des Luftfahrzeugs hin während des ersten Betriebsmodus und/oder während des zweiten Betriebsmodus zu neigen.

3. Drehflügel-Luftfahrzeug (1) nach einem der Ansprüche 1 bis 2,
**dadurch gekennzeichnet, dass** es ein erstes Mittel (61) zum Trennen zwischen dem Hauptleistungsgetriebe (30) und der Antriebsanlage (20) aufweist.

4. Drehflügel-Luftfahrzeug (1) nach einem der Ansprüche 1 bis 3,
**dadurch gekennzeichnet, dass** es ein zweites Mittel (62) zum Trennen zwischen dem hinteren Leistungsgetriebe (40) und der Antriebsanlage (20) aufweist.

5. Drehflügel-Luftfahrzeug (1) nach einem der Ansprüche 1 bis 4,
**dadurch gekennzeichnet, dass** die Antriebsanlage (20) mindestens einen Motor (21) aufweist, der in Eingriff steht mit einem Mittel (70) zum Aufteilen der entwickelten Leistung, wobei das Mittel (70) zum Aufteilen einen Hauptantriebsstrang (C1) antreibt, der mit dem Hauptleistungsgetriebe (30) verbunden ist, wobei das Mittel (70) zum Aufteilen einen hinteren Antriebsstrang (C2) antreibt, der mit dem hinteren Leistungsgetriebe (40) verbunden ist.

6. Drehflügel-Luftfahrzeug (1) nach einem der Ansprüche 1 bis 5,
**dadurch gekennzeichnet, dass** der Drehflügel (2) eine Mehrzahl erster Rotorblätter (3) aufweist mit einer ersten Blattwinkelverstellung, die durch Flugsteuerungen (80) gesteuert werden, die mit Servosteuerungen verbunden sind, die eine Taumelscheibe betätigen, wobei das Luftfahrzeug (1) ein Kompensationsmittel (90) aufweist, damit die Neigung der Rotorwelle (31) nicht die Position der Flugsteuerungen (80) und der Sezvosteuerungen ohne ein Zutun des Piloten verändert.

7. Drehflügel-Luftfahrzeug (1) nach einem der Ansprüche 1 bis 6,
**dadurch gekennzeichnet, dass** das Neigungsmittel (50) mit dem Hauptleistungsgetriebe (30) zum Neigen der Rotorwelle (31) zusammenwirkt.

8. Drehflügel-Luftfahrzeug (1) nach einem der Ansprüche 1 bis 7,
**dadurch gekennzeichnet, dass** es mindestens einen Flügel (500) aufweist, der sich zu beiden Seiten des Rumpfes erstreckt.

9. Verfahren zum Steuern eines Drehflügel-Luftfahrzeugs (1), welches einen Rump (4) aufweist, der sich von einem hinteren Ende (4") zu einem vorderen Ende (4') entlang einer anteroposterioren Längsebene (P1) erstreckt, wobei der Rumpf (4) einen Drehflügel (2) aufweist, der zumindest teilweise den Auftrieb und den Vortrieb des Luftfahrzeugs (1) gewährleisten kann und einen hinteren Rotor (10), wobei das Luftfahrzeug (1) eine Antriebsanlage (20) aufweist, die
den Drehflügel (2) über ein Hauptleistungsgetriebe (30) antreibt, das mit einer Rotorwelle (3) des Drehflügels (2) fest verbunden ist, wobei die Antriebsanlage (20) den hinteren Rotor (10) über ein hinteres Leistungsgetriebe (40) antreibt, wobei das hintere Leistungsgetriebe (40) mit einem festen Teil (41), der an dem Rumpf (4) befestigt ist, und einem beweglichen Teil (42) versehen ist, der mit dem hinteren Rotor (10) verbunden ist, wobei das Luftfahrzeug ein Mittel (43) zum Verschwenken des beweglichen Teils (42) aufweist, um reversibel den hinteren Rotor (10) aus einer ersten festen Position (POS1), in der der hintere Rotor (10) dazu dient, die Gierbewegung des Luftfahrzeugs (1) zu steuern, in eine zweite ausrichtbare Position (POS2) zu verschwenken, in der der hintere Rotor (10) um eine Schwenkachse (AX2) schwenkt, um die Gierbewegung zu steuern und um mindestens teilweise den Vortrieb des Luftfahrzeugs (1) zu steuern, wobei das Luftfahrzeug (1) ein Neigungsmittel (50) aufweist, um die Rotorwelle (31) in der anteroposterioren Längsebene (P1) zum hinteren Ende (4") oder zum vorderen Ende (4') zu beiden Seiten einer neutralen Stellung (200) zu verschwenken, wobei bei dem Verfahren:
- während eines ersten Betriebsmodus der hintere Rotor (10) gesteuert wird, um ihn in die erste Position (POS1) zu bringen, und der Drehflügel (2) gesteuert wird, damit die Rotorwelle (31) zum vorderen Ende (4') mit einem Winkel zwischen Null und einem vorgegebenen ersten Winkel geneigt ist,
- während eines zweiten Betriebsmodus der hintere Rotor (10) gesteuert wird, um ihn in die zweite ausrichtbare Position (POS2) zu bringen, und der Drehflügel (2) so gesteuert wird, dass die Rotorwelle (31) eine Neigung zum vorderen Ende (4') hin aufweist, die zwischen einem Winkel Null und dem ersten vorgegebenen Winkel liegt,
- während eines dritten Betriebsmodus der hintere Rotor (10) gesteuert wird, um ihn in die zweite Position (POS2) zu bringen, und die Rotationsgeschwindigkeit des Drehflügels (2) durch die Neigung der Rotorwelle (31) zum hinteren Ende (4") hin mit einem Winkel zwischen Null und einem zweiten vorgegebenen Winkel gesteuert wird.

## Claims

1. Rotary-wing aircraft (1) provided with an airframe (4) extending from a rear end (4") to a front end (4') along a longitudinal fore-aft plane (P1), said airframe (4) carrying the rotary wing (2) capable of providing at least part of the lift and propulsion of the aircraft (1) and a rear rotor (10); the rear rotor (10) being capable of pivoting so as to be either in a first, stationary position (POS1), in which said rear rotor (10) is used for controlling the yaw of said aircraft (1) or in a second position (POS2), said aircraft (1) moving, in a first operating mode, when said rear rotor (10) is in said first position (POS1), said aircraft (1) having a power plant (20) driving said rotary wing (2) by means of a main power transmission unit (30), secured to a mast (31) of said rotary wing (2), said power plant (20) driving said rear rotor (10) by means of a rear power transmission unit (40), said rear power transmission unit (40) being provided with a stationary portion (41) secured to said cell (4) and a mobile portion (42) linked to said rear rotor (10) to allow said rear rotor (10) to pivot,
the rotary-wing aircraft (1) comprising:
- a pivot means (43) for pivoting said mobile portion (42), tilting the rear rotor (10) reversibly from said first position (POS1) to said second position (POS2) so that said aircraft switches from the first operating mode to a second operating mode, said second position being adjustable, said pivot means pivoting the rear rotor about an axis of tilt (AX2) so as to orient said second position of said rear rotor (10) relative to the longitudinal fore-aft plane (P1) in a predefined angular sector in order to control the yaw movement and to control at least partly the propulsion of said aircraft (1) during the second operating mode,
**characterised in that** it comprises:
- a tilt means (50) tilting said mast (31) reversibly in the longitudinal fore-aft plane (P1) towards the rear end (4") of said aircraft so that said aircraft switches from the second operating mode to a third operating mode during which the propulsion of the aircraft is provided solely by the rear rotor (10).

2. Rotary-wing aircraft (1) according to claim 1,
**characterised in that** said tilt means (50) acts reversibly on said mast (31) in order to tilt the mast (31) in the longitudinal fore-aft plane (P1) towards the front end (4') of said aircraft during the first operating mode and/or the second operating mode.

3. Rotary-wing aircraft (1) according to any one of claims 1 to 2,
**characterised in that** it comprises a first disengagement means (61) for disengaging said main power transmission unit (30) from said power plant (20).

4. Rotary-wing aircraft (1) according to any one of claims 1 to 3,
**characterised in that** it includes a second disengagement means (62) for disengaging said rear power transmission unit (40) from said power plant (20).

5. Rotary-wing aircraft (1) according to any one of claims 1 to 4,
**characterised in that** said power plant (20) comprises at least one motor (21) engaged with a sharing means (70) for sharing the power output, said sharing means (70) driving a main drive train (C1) connected to said main power transmission unit (30), said sharing means (70) driving a rear drive train (C2) connected to said rear power transmission unit (40).

6. Rotary-wing aircraft (1) according to any one of claims 1 to 5, **characterised in that** said rotary wing (2) comprising a plurality of first blades (3) having a first variable pitch controlled by flight controls (80) connected to servo-controls actuating a swash plate, said aircraft (1) comprises a compensation means (90) so that tilting said mast (31) does not change the position of said flight controls (80) and said servo-controls without any action by the pilot.

7. Rotary-wing aircraft (1) according to any one of claims 1 to 6,
**characterised in that** said tilt means (50) cooperates with said main power transmission unit (30) in order to tilt said mast (31).

8. Rotary-wing aircraft (1) according to any one of claims 1 to 7,
**characterised in that** it includes at least one wing (500) extending on either side of said cell.

9. Method for controlling a rotary-wing aircraft (1) provided with an airframe (4) extending from a rear end (4") to a front end (4') along a longitudinal fore-aft plane (P1), said airframe (4) carrying a rotary wing (2) capable of providing at least part of the lift and propulsion of the aircraft (1) and a rear rotor (10), said aircraft (1) having a power plant (20) driving said rotary wing (2) by means of a main power transmission unit (30), secured to a mast (31) of said rotary wing (2), said power plant (20) driving said rear rotor (10) by means of a rear power transmission unit (40), said rear power transmission unit (40) being provided with a stationary portion (41) secured to said airframe (4) and a mobile portion (42) linked to said rear rotor (10), said aircraft including a pivot means (43) for pivoting said mobile portion (42) in order to tilt the rear rotor (10) reversibly from a first, stationary position (POS1), in which said rear rotor (10) is used for controlling the yaw of said aircraft (1) to a second, orientable position (POS2), during which said rear rotor (10) pivots about an axis of tilt (AX2) in order to control the yaw movement and to control at least partly the propulsion of said aircraft (1), said aircraft (1) comprising a tilt means (50) for tilting said mast (31) in the longitudinal fore-aft plane (P1) towards the rear end (4") or towards the front end (4') on either side of a neutral position (200), during which:
- during a first operating mode, said rear rotor (10) is controlled so as to dispose it in said first position (POS1) and said rotary wing (2) is controlled so that said mast (31) is tilted towards said front end (4') by an angle between zero and a first given angle,
- during a second operating mode, said rear rotor (10) is controlled so as to dispose it in said second, orientable position (POS2) and said rotary wing (2) is controlled so that said mast (31) is tilted towards said front end (4') by an angle between zero and the first given angle,
- during a third operating mode, said rear rotor (10) is controlled so as to dispose it in said second position (POS2) and the rotational speed of said rotary wing (2) is controlled by tilting the mast (31) towards said rear end (4") by an angle between zero and a second given angle.
